# EUROPEAN PATENT APPLICATION

(11) **EP 4 838 293 A1**
(43) Date of publication of application: **11.11.2026**
(21) Application number: 25174417.3
(22) Date of filing: 06.05.2025
(51) Int. Cl.: G02F 1/11, G02F 1/335

(54) **AN INTEGRATED DEVICE AND A METHOD FOR SIGNAL PROCESSING**

(71) Applicant: Imec VZW, 3001 Leuven (BE)
(72) Inventor: PEYSKENS, Frédéric Olivier, 9051 Sint-Denijs-Westrem (BE)
(74) Representative: AWA Sweden AB

(57) **Abstract**

An integrated device (100) for signal processing comprises: an acousto-optic medium layer (110) configured to receive an acoustic signal (10) for providing a variation in refractive index in an acousto-optic interaction region (112); an input waveguide (120) configured to direct an input light signal (20) towards the acousto-optic interaction region (112); wherein a first portion of the input light signal (20) is diffracted, in relation to a selected frequency of the acoustic signal (10) for forming a first light signal (22) being frequency shifted based on the selected frequency, and wherein a second portion of the input light signal (20) passes non-diffracted through the acousto-optic interaction region for forming a second light signal (24); wherein the integrated device (100) is configured to combine the first light signal (22) and the second light signal (24) for generating a combined signal with a beat frequency corresponding to the selected frequency.

## Description

### Technical field

The present description relates to an integrated device and a method for signal processing. In particular, the present description relates to using a light signal for signal processing.

### Background

Photonic integrated circuits (PICs) are a promising route to integrate many optical functionalities on a single chip. This provides scalability and cost reduction. Photonic systems may be used for processing microwave or radio frequency signals. For instance, photonic systems may provide low loss transmission of signals that are immune to radio frequency interference.

However, there is a need for improvement of signal processing capabilities in an integrated photonic system. For instance, there is a need for providing a simple manner of narrow-band filtering of a signal.

### Summary

An objective of the present description is to provide accurate processing of a signal of interest using a relatively simple set-up. Another objective of the present description is to enable accurate processing of a signal through converting of the signal to be carried by a light signal. A particular objective of the present description is to enable narrow-band filtering of a microwave or radio frequency signal using a light signal.

According to a first aspect, there is provided an integrated device for signal processing, said integrated device comprising: an acousto-optic medium layer, wherein the acousto-optic medium layer is configured to receive an acoustic signal being representative of a signal to be processed, wherein acousto-optic medium of the acousto-optic medium layer is configured to provide a variation in refractive index in an acousto-optic interaction region based on the acoustic signal propagating in the acousto-optic medium layer; an input waveguide configured to guide an input light signal and configured to direct the input light signal into the acousto-optic medium layer towards the acousto-optic interaction region; wherein the acousto-optic medium in the acousto-optic interaction region is configured to cause a first portion of the input light signal to be diffracted, in dependence of a relation of the input light signal to a selected frequency of the acoustic signal, by the input light signal interacting with the variation in refractive index for forming a first light signal being frequency shifted based on the selected frequency of the acoustic signal, and wherein the acousto-optic interaction region is configured to provide a second portion of the input light signal passing non-diffracted through the acousto-optic interaction region for forming a second light signal; wherein the integrated device is configured to combine the first light signal and the second light signal for generating a combined signal with a beat frequency corresponding to the selected frequency of the acoustic signal.

The integrated device uses an acousto-optic medium layer for providing interaction between the acoustic signal and the input light signal. Thus, the device utilizes the acoustic signal for representing the signal to be processed and processes the acoustic signal using the input light signal. Acousto-optic interaction has a narrow bandwidth, which is used by the device for providing processing of the signal of interest, e.g., for providing narrow-band filtering of the signal.

It should be realized that a signal of interest may be converted to the acoustic signal and may then be further processed by the interaction with the input light signal. For instance, the signal of interest may be a microwave or radio frequency signal, which may be acquired by an antenna into an electrical signal at microwave or radio frequency. This electrical signal may be converted to the acoustic signal for processing of the signal using the interaction of the acoustic signal with the input light signal. However, it should be realized that the signal of interest may be another type of signal, such as a light signal, e.g., a light detection and ranging (LIDAR) signal, which is converted to the acoustic signal. Further, the signal of interest may even originally be in form of the acoustic signal.

The integrated device may be configured to accurately define a selected frequency for providing processing of the acoustic signal, thanks to the narrow bandwidth of acousto-optic interaction. This may be used for providing accurate filtering of the acoustic signal. For instance, a bandwidth smaller than 1 MHz may be achieved for the selected frequency of the acoustic signal being larger than 1 GHz.

The interaction of the first portion of the input light signal with the acoustic signal causes selected information of the acoustic signal to be transferred to the first light signal. The acousto-optic interaction may thus transfer information from the acoustic signal to the first light signal simultaneously with a selection of which information is to be transferred. Thus, a filtering of the signal of interest may be provided simultaneously with transfer of information to be carried by the first light signal.

The signal processing may provide rejection of noise at frequency bands outside a frequency of interest. The signal processing may additionally or alternatively provide extracting of information at the selected frequency from other information and/or noise in other frequency bands. According to some embodiments, the signal processing may be referred to as filtering of the signal.

The device is integrated in that all components of the device are united in a single structure. Thus, the components may be attached to each other. This implies that the integrated device may be very compact.

The integrated device may be configured to provide a fixed, well-defined relationship between the input waveguide and the acousto-optic medium layer. Similarly, the integrated device may be configured to provide a fixed, well-defined relationship between a transducer for generating the acoustic signal and the acousto-optic medium layer.

The integrated device may for instance utilize available technology for high quality manufacturing of miniaturized components, such as using available complementary metal-oxide-semiconductor (CMOS) manufacturing processes. In this regard, the integrated device may be formed using materials that are compatible with CMOS manufacturing processes. However, it should be realized that the integrated device need not necessarily use CMOS manufacturing processes and that other materials may therefore be used.

The acousto-optic medium layer may comprise an acousto-optic medium that is configured to provide interaction between the acoustic signal and the light signal propagating in the acousto-optic medium layer. Thus, the acousto-optic medium is configured to provide an optical property which is dependent on the acoustic signal propagating through the acousto-optic medium. In particular, the acousto-optic medium is configured to provide a variation in refractive index based on the acoustic signal propagating in the acousto-optic medium layer.

Without being bound to a particular theory, it is noted that the variation in refractive index in the acousto-optic medium layer may be caused by a perturbation of the acousto-optic medium layer caused by compression and expansion of regions in the acousto-optic medium layer by an acoustic wave carrying the acoustic signal. It should further be noted that the acoustic wave may provide a slight thermal effect due to absorption of the acoustic wave by the acousto-optic medium layer, which absorption may also translate to a change of refractive index.

The acousto-optic medium layer may be configured to propagate a bulk acoustic wave in the acousto-optic medium layer. Thus, the acousto-optic medium layer may be configured to receive the acoustic signal in form of a bulk acoustic wave.

The acousto-optic medium layer may be configured to receive the acoustic signal and the input light signal such that the acoustic signal and the input light signal propagating in the acousto-optic medium overlap in the acousto-optic interaction region. Thus, the acousto-optic interaction region may be defined as a region in the acousto-optic medium layer wherein the acoustic signal and the input light signal overlap.

It should be realized that the acousto-optic medium layer may have a homogeneous composition and may have same characteristics in the acousto-optic interaction region and outside the acousto-optic interaction region. Thus, the acousto-optic interaction region may be defined by where the acoustic signal and the input light signal are received, and the acousto-optic interaction region may be moved by changing direction of the acoustic signal and/or the input light signal received by the acousto-optic interaction region, such as changing an incidence angle of the acoustic signal and/or the input light signal on the acousto-optic medium layer.

The input waveguide may be any structure providing guiding of light. The input waveguide may be configured to confine light in a cross-section perpendicular to an extension of the input waveguide. The input waveguide may thus be configured to restrict light to follow a path defined by the extension of the input waveguide, whereby transmission of light with low loss may be provided. The input waveguide may for instance guide light by light being reflected on inner walls of the input waveguide by total internal reflection or by a reflective coating being provided on the walls of the input waveguide. The input waveguide is configured to propagate the input light signal along the path of the input waveguide.

The input waveguide may be formed by any suitable core material surrounded by a suitable cladding material. Thus, the input light signal may be propagated in the core material and may be reflected by total internal reflection in an interface between the core material and the cladding material. Thus, the core material may have a higher refractive index than the cladding material. The core material may be any suitable material for propagating the light with low loss, i.e., having low absorption in the wavelength range of light. For instance, the illumination waveguide may be formed by a core material of silicon or silicon nitride (SiN) surrounded by a cladding material of silicon dioxide. However, it should be realized that other materials may be used.

According to some embodiments, the input waveguide may be formed by SiN. However, it should be realized that the integrated device is by no means limited for use with SiN waveguides and may alternatively be used with waveguides formed in any other material.

Use of SiN waveguides may ensure that the integrated device may be used with wavelengths of light spanning for instance from visible light to infrared light. The acousto-optic medium of the acousto-optic medium layer should also be transparent to the wavelength of light such that no or minimum loss of light due to absorption in the acousto-optic medium layer occurs.

As used herein, the term "*light*" should be broadly construed as to not be limited to visible light. Rather, light should be interpreted to encompass other parts of the electro-magnetic spectrum, including for instance ultraviolet light and infrared light.

The input waveguide may be arranged in relation to the acousto-optic medium layer such that the input light signal propagating in the input waveguide is directed into the acousto-optic medium layer. The input waveguide may comprise an end facet arranged in relation to the acousto-optic medium layer for directing the input light signal into the acousto-optic medium layer. According to another embodiment, the input waveguide may be configured to re-direct the input light signal propagating in the input waveguide into the acousto-optic medium layer.

The acousto-optic medium layer is configured to receive the acoustic signal and the input light signal in the acousto-optic interaction region for providing an interaction between the acoustic signal and the input light signal. Thus, some of the input light signal is affected by the acoustic signal and some of the input light signal passes unaffected through the acousto-optic interaction region. Hence, a first portion of the input light signal is diffracted to form a first light signal, and a second portion of the input light signal is non-diffracted to form the second light signal.

Without being bound to a particular theory, it is noted that the acoustic wave formed by the acoustic signal in the acousto-optic medium layer may provide spatially periodic variations of the refractive index in the acousto-optic medium layer. This implies that the input light signal may be configured to be diffracted in the acousto-optic interaction region when a periodicity of the variations of the refractive index matches a grazing angle (i.e., angle between a propagation direction of the input light signal and a direction perpendicular to the propagation direction of the acoustic signal) and a wavelength of the input light signal. The periodicity of the variations of the refractive index is dependent on a frequency of the acoustic signal.

The input light signal may be diffracted by the interaction of the input light signal with the variation in refractive index in accordance with Bragg conditions for diffraction. Thus, a constructive interference may be defined based on a difference in distance, traveled by light being scattered at different planes formed by the variation of refractive index, corresponding to an integer number of the wavelength of the input light signal. When the Bragg condition is met, i.e., when constructive interference occurs, the input light signal is diffracted. The input light signal may thus be configured to be reflected in the acousto-optic interaction region.

The input light signal may have a well-defined wavelength. For instance, the input light signal may be a laser light signal providing a narrow spectral linewidth. The input light signal may have a linewidth smaller than 1 nm, such as smaller than 0.1 nm.

Thus, the acousto-optic interaction may be highly selective to a frequency of the acoustic signal for which the periodicity of the variations of refractive index formed in the acousto-optic medium layer match the grazing angle and wavelength of the input light signal. Hence, a selected frequency of the acoustic signal may be accurately defined, wherein diffraction of the input light signal occurs for the selected frequency of the acoustic signal.

The frequency of the input light signal being diffracted by interaction with the variation in refractive index in the acousto-optic medium layer is coupled to a neighboring frequency shifted by multiples of the selected frequency of the acoustic signal. Thus, the diffraction of the first portion of the input light signal forms a first light signal which is frequency shifted based on the selected frequency of the acoustic signal. However, due to phase mismatch of higher orders, only one order of frequency shift remains. In addition, the first light signal is frequency shifted down if the acoustic signal and the input light signal propagate in a same direction in the acousto-optic medium layer (i.e., the input light signal is incident on planes formed by the variation of refractive index from a same side as the acoustic signal) or frequency shifted up if the acoustic signal and the input light signal propagate in opposite directions in the acousto-optic medium layer.

The integrated device may be configured to combine the first light signal and the second light signal in various manners. For instance, each of the first light signal and the second light signal may be received by a respective waveguide, and the first light signal and the second light signal may thereafter be combined. Alternatively, the first signal and the second light signal may be directed to a common portion of the acousto-optic medium layer for being combined in the acousto-optic medium layer or being combined at an input of a single waveguide formed at a location in relation to the acousto-optic medium layer for receiving both the first light signal and the second light signal.

The integrated device may further be configured to reflect the first light signal and/or the second light signal, e.g., at interfaces of the acousto-optic medium layer before the first light signal is combined with the second light signal and/or before the first light signal and the second light signals are received by waveguides.

The first light signal is frequency shifted based on the diffraction of light in interaction with the variation in refractive index in the acousto-optic interaction region. However, the second light signal is not frequency shifted, since the second light signal passes unaffected through the acousto-optic interaction region. This implies that there is a frequency difference between the first light signal and the second light signal such that the combined signal has a beat frequency corresponding to the frequency difference between the first light signal and the second light signal. The beat frequency corresponds to the selected frequency of the acoustic signal.

The frequency shifting of the first light signal implies that the integrated device enables heterodyne detection of information carried by the acoustic signal by combining the first light signal and the second light signal. The integrated device may be configured to combine the first light signal and the second light signal in a photodetector or may be configured to combine the first light signal and the second light signal before transporting the combined signal to a photodetector. According to yet another alternative, the integrated device may be configured to form the combined signal, which may then be transported from the integrated device, e.g., for being detected in an external unit separate from the integrated device.

It is an insight of the present description that the acousto-optic interaction may be used for providing high selectivity of extracting information at a particular, selected frequency of an acoustic signal by transferring the selected frequency of the acoustic signal to a diffracted portion of a light signal and further combining the diffracted portion of the light signal with a non-diffracted portion of the light signal.

The integrated device may be configured to tune the selected frequency of the acoustic signal. Thus, by changing properties of the input light signal being incident on the acousto-optic interaction region, the selected frequency of the acoustic signal may be changed. For instance, the grazing angle and/or the wavelength of the input light signal may be changed, providing a change of the selected frequency of the acoustic signal with which the input light signal will interact. The grazing angle may be controlled by controlling an output coupler of the input waveguide for directing the input light signal towards the acousto-optic interaction region. For instance, the output coupler may be controlled by providing heating of the output coupler through a heater arranged close to the output coupler. The wavelength of the input light signal may be controlled by controlling a light source providing the input light signal.

The integrated device may be configured to provide signal processing of a selected frequency of the acoustic signal in a GHz range, or at least a selected frequency larger than 300 MHz. The integrated device may thus be configured to provide microwave photonics. Although the integrated device could be used for smaller frequencies, the grazing angle for the input light signal may typically need to be very small, such that it is difficult to provide an arrangement of the input waveguide in relation to the acousto-optic medium layer for achieving a desired grazing angle.

According to an embodiment, the integrated device is configured to set an angle of the input light signal in relation to a direction of propagation of the acoustic signal in the acousto-optic interaction region and a wavelength of the input light signal for defining the selected frequency of the acoustic signal, wherein the integrated device is configured to process the selected frequency from the acoustic signal.

The integrated device may be arranged to provide a fixed angle of the input light signal towards the acousto-optic interaction region. Further, the integrated device may comprise a light source or may receive the input light signal from an external light source providing a fixed wavelength. Thus, the integrated device may be set up for defining a fixed selected frequency of the acoustic signal with which the input light signal will interact.

However, the integrated device may alternatively be configured to allow the angle of the input light signal and/or the wavelength of the input light signal to be dynamically set for dynamically changing the selected frequency of the acoustic signal.

According to an embodiment, the input waveguide comprises an output coupler configured to direct the input light signal into the acousto-optic medium layer, the output coupler being configured to control the angle of the input light signal in relation to the direction of propagation of the acoustic signal in the acousto-optic interaction region.

This is a suitable manner of providing the input light signal into the acousto-optic medium layer. The input waveguide may thus be provided in a separate layer from the acousto-optic medium layer and the input light signal may be provided into the acousto-optic medium layer by the output coupler directing the input light signal out of the input waveguide and into the acousto-optic medium layer.

The output coupler may for instance be provided in form of an output grating. The output grating may be configured to set an angular direction of the input light signal in dependence of the wavelength of the input light signal.

According to an embodiment, the input waveguide is configured to receive the input light signal from a light source, wherein the input light signal is a coherent signal of a single wavelength.

The light source may be part of the integrated device. However, the light source may alternatively be external to the integrated device and the input waveguide may be configured to receive the input light signal from the external light source, e.g., through an input coupler.

The input light signal may be a coherent signal. This implies that information at the selected frequency of the acoustic signal may be accurately retrieved from the combined signal formed by combining the first light signal and the second light signal.

The input light signal may have a single wavelength. In other words, the input light signal may comprise a single spectral line with a narrow bandwidth. The input light signal may be formed by a laser light source for providing a coherent signal at a single wavelength.

According to an embodiment, the integrated device further comprises a first collecting waveguide configured to receive the first light signal for propagating the first light signal in the first collecting waveguide and a second collecting waveguide configured to receive the second light signal for propagating the second light signal in the second collecting waveguide.

Thus, the first light signal and the second light signal may be received by respective waveguides. This may facilitate bringing the first light signal and the second light signal to a common location for combining the first and the second light signals.

Each of the first collecting waveguide and the second collecting waveguide may be any structure providing guiding of light. The first and the second collecting waveguides may be configured to confine light in a cross-section perpendicular to an extension of the first and the second collecting waveguide, respectively. The first collecting waveguide may thus be configured to restrict light to follow a path defined by the extension of the first collecting waveguide, and the second collecting waveguide may be configured to restrict light to follow a path defined by the extension of the second collecting waveguide, whereby transmission of light with low loss may be provided. The first and the second collecting waveguides may for instance guide light by light being reflected on inner walls by total internal reflection or by a reflective coating being provided on the walls. The first and the second collecting waveguide is configured to propagate the first light signal and the second light signal, respectively, along the path of the first and the second collecting waveguide, respectively.

The first and the second collecting waveguides may be formed by any suitable core material surrounded by a suitable cladding material. Thus, the first light signal and the second light signal may be propagated in the core material and may be reflected by total internal reflection in an interface between the core material and the cladding material. Thus, the core material may have a higher refractive index than the cladding material. The core material may be any suitable material for propagating the light with low loss, i.e., having low absorption in the wavelength range of light. For instance, the illumination waveguide may be formed by a core material of silicon or silicon nitride (SiN) surrounded by a cladding material of silicon dioxide. However, it should be realized that other materials may be used.

The first and the second collecting waveguides may be formed by same material as the input waveguide.

The first collecting waveguide and the second collecting waveguide may each comprise an input coupler for receiving the first light signal and the second light signal, respectively, into the first collecting waveguide and the second collecting waveguide, respectively. The input coupler may ensure that light received at the input coupler is re-directed into the collecting waveguide for being propagated by total internal reflection in the collecting waveguide.

According to an embodiment, each of the first collecting waveguide and the second collecting waveguide is arranged at an interface surface of the acousto-optic medium layer and located to receive the first light signal and the second light signal, respectively, propagating in the acousto-optic medium layer.

The first collecting waveguide and the second collecting waveguide may thus be configured to receive light signals reaching an interface surface of the acousto-optic medium layer. The interface surface may be adapted to allow the first light signal and the second light signal to escape the acousto-optic medium layer, at least in a location where the first light signal and the second light signal are received by the first collecting waveguide and the second collecting waveguide, respectively.

The first collecting waveguide and the second collecting waveguide may be arranged at a common interface surface or may be arranged at different interface surfaces, such as at opposite interface surfaces of the acousto-optic medium layer.

The first collecting waveguide and the second collecting waveguide may be arranged in direct contact with the acousto-optic medium layer. However, the first and the second light signal may alternatively pass through another layer before reaching the first collecting waveguide and the second collecting waveguide, respectively.

According to an embodiment, the first collecting waveguide and the second collecting waveguide are arranged at a common interface surface of the acousto-optic medium layer, wherein the integrated device comprises at least one reflector at an opposite interface surface of the acousto-optic medium layer being opposite to the common interface surface, wherein the reflector is configured to reflect the second light signal.

The first collecting waveguide and the second collecting waveguide being arranged at the common interface surface of the acousto-optic medium layer may facilitate combining the first light signal and the second light signal. For instance, the first collecting waveguide and the second collecting waveguide may be arranged in a common waveguide layer. The first collecting waveguide and the second collecting waveguide may thus define paths within the common waveguide layer for bringing the first light signal and the second light signal together for combining them.

The first light signal and the second light signal may leave the acousto-optic interaction region towards opposite interface surfaces of the acousto-optic medium layer. The integrated device may thus comprise the reflector for reflecting the second light signal. This ensures that the second light signal may be reflected towards the common interface surface.

However, it should be realized that the integrated device may alternatively comprise a reflector configured to reflect the first light signal for reflecting the first light signal towards the common interface surface.

As yet another alternative, the integrated device may comprise a plurality of reflectors. Thus, each of the first light signal and the second light signal may be reflected before reaching the first collecting waveguide and the second collecting waveguide, respectively. The integrated device may even be configured to reflect the first light signal and/or the second light signal multiple at times.

According to an embodiment, the integrated device further comprises a photo-sensitive element, which is connected to the first collecting waveguide and the second collecting waveguide for receiving the combined signal of the first light signal and the second light signal in the photo-sensitive element.

Thus, the integrated device may be configured to detect the combined signal. The combined signal may be detected by the photo-sensitive element, which may thus convert the combined signal to an electrical signal.

The integrated device may further comprise a combiner, which is configured to be connected to the first collecting waveguide and the second collecting waveguide and configured to form the combined signal into a single waveguide which may further be connected to the photo-sensitive element. Thus, the combined signal may be formed before reaching the photo-sensitive element. The photo-sensitive element may thus be connected to the first collecting waveguide and the second collecting waveguide via the combiner and the single waveguide.

The photo-sensitive element may be configured in any manner for detecting light incident on the photo-sensitive element. For instance, the photo-sensitive element may be configured to convert an intensity of incident light to an electrical signal representing the intensity. The photo-sensitive element may for instance be implemented as a complementary metal-oxide-semiconductor (CMOS) sensor, a photodiode, or photo-multiplier tubes.

According to an embodiment, the acousto-optic medium layer defines a first plane and the input waveguide is arranged in a waveguide layer defining a second plane different than the first plane, wherein the input waveguide is configured to guide the input light signal in a direction along the second plane and to direct the input light signal out of the second plane towards the first plane.

This may facilitate manufacturing of the integrated device since the acousto-optic medium may be arranged in a separate layer from the input waveguide. Thus, manufacturing of the input waveguide may be even completely separated from manufacturing of the acousto-optic medium layer. The input waveguide may be formed on a separate substrate from the acousto-optic medium layer and may later be easily bonded to the acousto-optic medium layer for forming the integrated device.

Thus, the input waveguide may be formed in a separate layer from the acousto-optic medium layer. This provides a large freedom of design in that the input waveguide may be formed in a waveguide layer that may provide any desired structure of the input waveguide.

The first collecting waveguide and/or the second collecting waveguide may also be provided in a common layer with the input waveguide. This may facilitate manufacturing as all waveguide structures may be formed in the same waveguide layer.

The input light signal may be received through a top or bottom surface of the plane of the acousto-optic medium layer. However, according to an alternative, the input waveguide may be provided in a common plane of the acousto-optic medium layer such that the input light signal may be received by the acousto-optic medium through a side wall or edge of the acousto-optic medium in the acousto-optic medium layer.

The input waveguide may be planar in that the waveguide extends along the first plane. This first plane may be parallel to or common with the second plane of the acousto-optic medium layer. The input waveguide may have any cross-sectional shape and may follow any path within the first plane.

According to an embodiment, the acousto-optic medium layer is configured to receive the acoustic signal at a first interface surface of the acousto-optic medium layer facing the input waveguide.

Thus, the input waveguide may be arranged at a common side of the acousto-optic medium layer in relation to the acoustic signal being input into the acousto-optic medium layer. Thus, both the input light signal and the acoustic signal may be received into the acousto-optic medium layer through the first interface surface. For instance, the acoustic signal may pass the waveguide layer before reaching the acousto-optic medium layer.

The integrated device may comprise a transducer for generating the acoustic signal, e.g., based on receiving a signal of interest. The transducer may be arranged in a separate plane from the waveguide layer, which may facilitate manufacturing of the integrated device.

The transducer may be arranged in direct contact with the acousto-optic medium layer. However, according to an alternative, the waveguide layer may be arranged between the transducer and the acousto-optic medium layer such that the acoustic signal passes the waveguide layer into the acousto-optic medium layer.

The input light signal and the acoustic signal may thus be configured to travel from the same interface surface of the acousto-optic medium layer towards the acousto-optic interaction region. This implies that the first light signal will be downshifted in frequency due to the interaction with the acoustic signal.

According to another embodiment, the acousto-optic medium layer is configured to receive the input light signal through a first interface surface and to receive the acoustic signal through a second interface surface opposite to the first interface surface.

The light signal propagating through the acousto-optic medium layer from a first surface will thus meet an acoustic wave propagating through the acousto-optic medium layer from an opposite second surface. This implies that the first light signal will be upshifted in frequency due to the interaction with the acoustic signal.

According to an embodiment, the integrated device further comprises an acoustic absorber arranged at a second interface surface of the acousto-optic medium layer opposite to the first interface surface.

The acoustic absorber may ensure that a reflection of the acoustic signal is avoided. In particular, the acoustic absorber may ensure that the acoustic signal is not reflected at the second interface surface back to the acousto-optic interaction region. Thus, interference of a reflected acoustic wave is avoided.

The acousto-optic medium may be configured to provide a low attenuation of the acoustic signal. Thus, the acoustic wave may decay slowly during propagation through the acousto-optic medium layer. The slow decay of the acoustic wave may ensure that an interaction length of the input light signal and the acoustic signal is long, which implies that the selected frequency may be selected with a narrow bandwidth.

However, the slow decay of the acoustic wave also implies that a reflected acoustic wave could have a strong amplitude. Therefore, the acoustic absorber may be needed to avoid interference by the reflected acoustic wave on the acousto-optic interaction.

The acoustic absorber may be even more important if a relatively low selected frequency of the acoustic signal is to be used since the acoustic signal typically has a lower attenuation at a lower frequency of the acoustic signal.

It should be realized that interference by a reflected wave may be avoided in alternative manners. For instance, the integrated device may comprise an acoustic reflector, which may be configured to direct a reflection of the acoustic signal away from the acousto-optic interaction region. According to another alternative, the integrated device may comprise an acoustic waveguide, which may be configured to capture the acoustic signal for avoiding that the acoustic signal is reflected.

According to an embodiment, the integrated device further comprises a transducer configured to receive an electrical signal to be processed and configured to convert the electrical signal into the acoustic signal, wherein the transducer is further configured to output the acoustic signal into the acousto-optic medium layer.

The transducer may be used for converting a signal of interest into the acoustic signal. Thus, the acoustic signal provides a representation of the signal of interest by the conversion provided by the transducer.

The transducer may be provided in a separate plane from the acousto-optic medium layer or in a common plane with the acousto-optic medium layer. Thus, the acoustic wave may be received by the acousto-optic medium through a top or bottom surface of a plane of the acousto-optic medium layer, or through a side wall or edge of the acousto-optic medium.

The transducer may comprise an acoustic wave resonator which may be formed in an integrated manner in the integrated device. The acoustic wave resonator may for instance be achieved using a piezoelectric material arranged between two conductive layers (electrodes). The transducer may be configured to receive the electrical signal. The electrical signal may drive a resonance in the piezoelectric material for generating the acoustic signal.

The transducer may be formed by thin films, which may be particularly suitable for integrating the transducer with other components of the integrated device, including the acousto-optic medium layer and the input waveguide.

According to an embodiment, the acousto-optic medium of the acousto-optic medium layer is configured to provide the variation in refractive index in the acousto-optic interaction region based on a traveling wave of the acoustic signal propagating in the acousto-optic medium layer.

This may ensure that the frequency shift based on the selected frequency is limited to a single frequency shift. Hence, the selected frequency of the acoustic signal may be accurately selected for affecting the input light signal.

In addition, using a traveling wave of the acoustic signal, a relatively large freedom of tuning the selected frequency is provided.

According to another embodiment, the acousto-optic medium of the acousto-optic medium layer is configured to provide the variation in refractive index in the acousto-optic interaction region based on a standing wave of the acoustic signal propagating in the acousto-optic medium layer.

The standing wave may be achieved by an acoustic wave propagating in a first direction through the acousto-optic interaction region being reflected to form a reflected wave propagating in a second direction through the acousto-optic interaction region such that the acoustic wave and the reflected wave form the standing wave.

This may require a resonance condition for the standing wave to be achieved. This may set a limitation to the selected frequency of the acoustic signal for providing the standing wave. Hence, tunability of the selected frequency may be limited.

In addition, for the standing wave, the input light signal may be frequency shifted based on multiples of the selected frequency, such that the first light signal may comprise sideband information at a frequency shift corresponding to 3*(selected frequency), 5*(selected frequency), etc. This may affect the signal processing. For instance, a filtering of the signal of interest may be affected.

Even though use of a traveling wave of the acoustic signal may be preferred, it should be realized that in some embodiments a standing wave of the acoustic signal may be used.

According to an embodiment, the acousto-optic medium of the acousto-optic medium layer is sapphire, lithium niobate, or quartz.

These may be suitable materials for providing processing of the acoustic signal based on an accurately selected frequency. For instance, the materials may ensure that the selected frequency is accurately filtered.

A bandwidth of filtering of the acoustic signal may be related to a frequency-quality product of the acousto-optic medium. Thus, a larger frequency-quality product may imply a narrower filter bandwidth.

Quartz, lithium niobate and sapphire all provide a large frequency-quality product.

According to an embodiment, the acousto-optic medium layer is configured to receive the acoustic signal having a frequency of at least 700 MHz, such as at least 2 GHz, such as at least 10 GHz.

The integrated device may provide efficient filtering of frequencies at high frequencies. Thus, the integrated device may be particularly useful for processing acoustic signals having high frequencies.

The acoustic signal may be generated based on a signal of interest used in wireless telecommunication. Thus, the acoustic signal may have a frequency within a frequency range used in wireless telecommunication, such as a frequency within a frequency range of 5G or 6G wireless telecommunication. For instance, the acoustic signal may have a frequency around 700 MHz, in a range between 3 - 4 GHz, or at a frequency up to 26 GHz.

According to a second aspect, there is provided a method for signal processing, said method comprising: receiving, by an acousto-optic medium layer, an acoustic signal being representative of a signal to be processed, the acoustic signal causing a variation in refractive index of an acousto-optic medium of the acousto-optic medium layer in an acousto-optic interaction region based on the acoustic signal propagating in the acousto-optic medium layer; directing an input light signal into the acousto-optic medium layer towards the acousto-optic interaction region, wherein the acousto-optic medium in the acousto-optic interaction region causes diffraction of a first portion of the input light signal, in dependence of a relation of the input light signal to a selected frequency of the acoustic signal, by the input light signal interacting with the variation in refractive index for forming a first light signal being frequency shifted based on the selected frequency of the acoustic signal, and wherein a second portion of the input light signal passes non-diffracted through the acousto-optic interaction region for forming a second light signal; and combining the first light signal and the second light signal for generating a combined signal with a beat frequency corresponding to the selected frequency of the acoustic signal.

Effects and features of this second aspect are largely analogous to those described above in connection with the first aspect. Embodiments mentioned in relation to the second aspect are largely compatible with the first aspect.

The method uses an acousto-optic medium layer for providing interaction between the acoustic signal and the input light signal. Thus, the method utilizes the acoustic signal for representing the signal to be processed and processes the acoustic signal using the input light signal. Acousto-optic interaction has a narrow bandwidth, which is used by the method for providing processing of the signal of interest, e.g., for providing narrow-band filtering of the signal.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a schematic view of an integrated device for signal processing according to an embodiment.
Fig. 2 is a schematic view of combining light signals in the integrated device of Fig. 1.
Fig. 3 represents schematic graphs of signals in the integrated device.
Fig. 4 is a flow chart of a method according to an embodiment.

### Detailed description

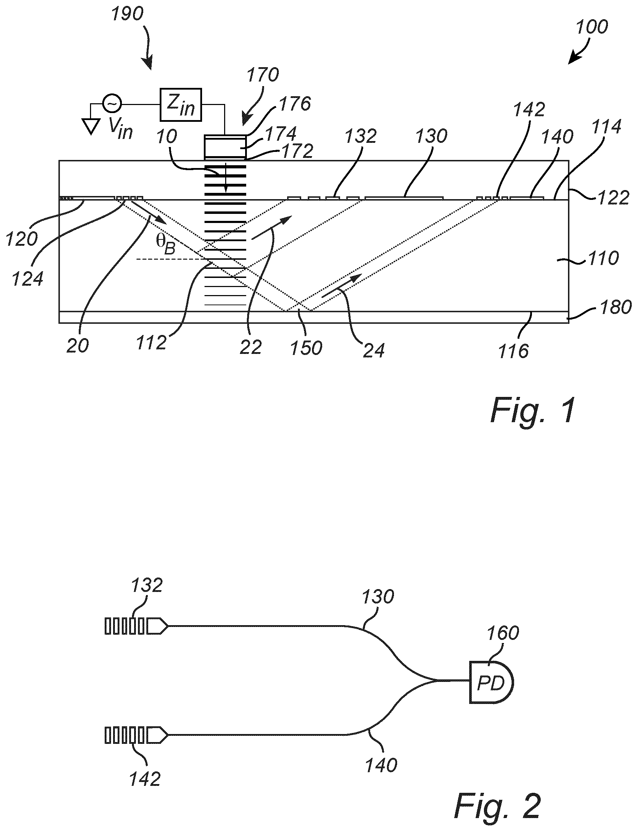

Referring now to Fig. 1, an integrated device 100 for signal processing will be described. Fig. 1 shows a cross-section of the integrated device 100.

The integrated device 100 is shown in Fig. 1 as forming a stack of layers. Each layer may extend in two dimensions defining a respective plane in two dimensions, wherein the layers are stacked such that the planes of the layers are arranged on top of and parallel with each other.

The stack of the integrated device 100 as shown in Fig. 1 will now be discussed from bottom to top of the stack as shown in Fig. 1, with a layer being arranged above another layer meaning that the layer is arranged closer to the top as illustrated in Fig. 1. It should however be realized that the integrated device 100 need not in use be arranged in a particular orientation but may rather be flipped or rotated from the orientation shown in Fig. 1.

The integrated device 100 comprises an acousto-optic medium layer 110. The acousto-optic medium layer 110 may form a substrate of the integrated device 100. Alternatively, the acousto-optic medium layer 110 may be arranged on a substrate. The acousto-optic medium layer 110 may be formed from an acousto-optic medium providing low acoustic loss of an acoustic wave. The acousto-optic medium may provide a high frequency-quality (*f*₀*Q*₀) product.

The acousto-optic medium of the acousto-optic medium layer 110 is further a material in which light can interact with the acoustic wave. In particular, the acousto-optic medium of the acousto-optic medium layer 110 may be configured to provide efficient diffraction of light based on a variation in refractive index in the acousto-optic medium layer 110 formed by the acoustic wave propagating in the acousto-optic medium layer 110.

The acousto-optic medium of the acousto-optic medium layer 110 may for instance be sapphire, lithium niobate, or quartz. However, other materials of the acousto-optic medium layer 110 may be used.

The integrated device may further be configured to receive an acoustic signal 10 into the acousto-optic medium layer 110. The acoustic signal 10 may be received from a transducer 170. However, the acoustic signal 10 may be received by the acousto-optic medium layer 110 in a different manner.

The integrated device 100 further comprises an input waveguide 120. The input waveguide 120 may be formed in a photonic integrated circuit (PIC) chip which is integrated onto the acousto-optic medium layer 110. The input waveguide 120 may be formed in a waveguide layer 122 which may be arranged above the acousto-optic medium layer 110. However, it should also be realized that the waveguide layer 122 may be arranged below the acousto-optic medium layer 110.

The input waveguide 120 may be a planar waveguide extending in a plane, such as the plane defined by the waveguide layer 122 above the acousto-optic medium layer 120. The input waveguide 120 may be configured to guide an input light signal 20 along the extension of the waveguide 120 in the plane. The input waveguide 120 may for instance be formed from SiN, which may allow guiding light signals of a visible wavelength. However, it should be realized that other materials, such as silicon, may be used.

The input waveguide 120 may be surrounded by a cladding material, such as silicon dioxide. The cladding material may have a suitable refractive index in relation to the refractive index of the material of the waveguide 120 such that total internal reflection of the input light signal 20 may occur within the input waveguide 120 so as to facilitate the input light signal 20 being guided by the input waveguide 120.

The waveguide 120 may comprise an output coupler 124, at which the input waveguide 120 is configured to output the input light signal 20 from the input waveguide 120. The output coupler 124 may be configured such that the input light signal 20 is directed towards the acousto-optic medium layer 110.

In the embodiment shown in Fig. 1, the acousto-optic medium layer 110 defines a first plane and the waveguide layer 122 defines a second plane different than the first plane. The input waveguide 120 is configured to guide the input light signal 20 in a direction along the second plane and to output the input light signal 20 out of the second plane towards the first plane. The input waveguide 120 is thus configured to re-direct the light signal at the output coupler 124.

The output coupler 124 may be formed by a grating coupler for redirecting the input light signal 20 propagating in the input waveguide 120 and for controlling a direction of propagation of the input light signal 20 in the acousto-optic medium layer 110.

The output coupler 124 of the input waveguide 120 may be configured to output a narrow light beam. For instance, the output coupler 124 may be configured to output a light beam having a diameter in a range of 10 - 100 µm.

The acousto-optic medium layer 110 may be configured to receive the input light signal 20 output by the waveguide 120 and may also be configured to receive the acoustic signal 10, e.g., from the transducer 170. The acoustic signal 10 will cause a variation in refractive index in the acousto-optic medium layer 110 based on the acoustic signal 10 propagating in the acousto-optic medium layer 110.

The input waveguide 120 is configured to direct the input light signal 20 into a region in the acousto-optic medium layer 110 in which the acoustic signal 10 is propagating. Thus, an acousto-optic interaction region 112 may be defined in the acousto-optic medium layer 110. The acousto-optic medium layer 110 is configured to receive both the acoustic signal 10 and the input light signal 20 in the acousto-optic interaction region such that acousto-optic interaction can take place.

The variation in refractive index may have a periodicity within the acousto-optic medium layer 110, due to the propagation of the acoustic signal 10 in the acousto-optic medium. The input light signal 20 being incident on the variation in refractive index may be diffracted in correspondence to an effect of a grating with a periodicity corresponding to the periodicity of the variation in refractive index, caused by the acoustic signal 10. The input light signal 20 may then be configured to be diffracted in a reflective manner by the variation in refractive index.

The acousto-optic medium layer 110 thus causes diffraction of the input light signal 20 to form a diffracted first light signal 22 based on the variation in the refractive index. The diffraction of the input light signal 20 changes the direction of propagation of the input light signal 20.

The acousto-optic medium layer 110 may be configured to receive a traveling wave of the acoustic signal 10. The variation in refractive index in the acousto-optic medium layer 110 may thus be defined by a traveling wave.

The integrated device 100 may further comprise an acoustic absorber 180 arranged at an interface surface of the acousto-optic medium layer 110 opposite to the interface surface at which the acoustic signal 10 is received. The acoustic absorber 180 may thus be configured to absorb the acoustic signal 10 having passed through the entire thickness of the acousto-optic medium layer 110 and may prevent the acoustic signal 10 to be reflected back towards the acousto-optic interaction region 112 and prevent a reflected signal to interfere with the variation in refractive index formed in the acousto-optic interaction region 112.

The acoustic absorber 180 may for instance be formed by a layer of a material for absorbing acoustic signals below the acousto-optic medium layer 110. For instance, a metal or an epoxy with acoustic impedance matched to the acousto-optic medium layer may be used.

The diffraction of the input light signal 20 is dependent on a relation of an angle between propagation of the input light signal 20 and propagation of the acoustic signal 10, a wavelength of the input light signal 20, and a frequency of the acoustic signal 10.

The input light signal 20 may be a coherent signal of a single wavelength. For instance, the input light signal 20 may be received by the input waveguide 120 from a light source, such as a laser light source. The input light signal may have a small spectral linewidth, which enables the integrated device 100 to define interaction with a specific frequency of the acoustic signal 10.

The input light signal 20 may be configured to define a grazing angle *θ_{B}* between a direction of propagation of the input light signal 20 and a direction perpendicular to propagation of the acoustic signal 10. This grazing angle *θ_{B}* corresponds to a Bragg angle for defining diffraction of a light signal on a grating.

The input light signal 20 having a well-defined wavelength will thus be diffracted by the variation in refractive index when the grazing angle *θ_{B}* and the wavelength of the input light signal 20 matches a distance between planes of variation in refractive index in the acousto-optic interaction region 112. This distance is dependent on a frequency of the acoustic signal 10. Thus, the input light signal 20 may be diffracted based on a selected frequency of the acoustic signal 10. The diffraction may be limited only to the selected frequency allowing the input light signal 20 to selectively interact with the selected frequency.

The variation in refractive index within the acousto-optic medium layer 110 may be oriented along a direction of propagation of the acoustic wave. Thus, if the acoustic signal 10 is received by the acousto-optic medium layer 110 such that the main direction of propagation is incident perpendicularly on an interface surface 114 of the acousto-optic medium layer 110, lines of equal refractive index within the acousto-optic medium layer 110 will be arranged parallel with the plane of the acousto-optic medium layer 110.

The input light signal 20 may be propagated in the input waveguide 120 in parallel with the acousto-optic medium layer 110. The input light signal 20 may further be output by the output coupler 124 at an angle in relation to the plane of the acousto-optic medium layer 110. Thus, the propagation direction of the input light signal 20 may differ from the propagation direction of the acoustic signal 10, such that the grazing angle *θ_{B}* of the input light signal 20 in relation to the planes of equal refractive index in the acousto-optic interaction region 112 is defined.

The input light signal 20 incident on the acousto-optic interaction region 112 will be partly diffracted and partly pass through the acousto-optic interaction region without being diffracted. Thus, a first light signal 22 is formed based on the input light signal 20 being diffracted by the variation in refractive index in the acousto-optic medium layer. Further, a second light signal 24 is formed based on the input light signal 20 passing non-diffracted through the acousto-optic interaction region 112.

The variation in the refractive index of the acousto-optic medium layer 110 is formed based on the acoustic signal 10, which has a frequency providing the variation in the refractive index. The frequency of the acoustic signal 10, i.e., the selected frequency will thus couple the frequency of the input light signal 20 to a neighboring frequency which is frequency shifted by the selected frequency of the acoustic signal 10. Thus, the first light signal 22 is frequency shifted based on the selected frequency of the acoustic signal 10.

The acousto-optic medium layer 110 may be configured to receive the acoustic signal 10 at a first interface surface 114 of the acousto-optic medium layer 110 facing the input waveguide 120. This implies that the input light signal 20 is also received into the acousto-optic medium layer 110 at the first interface surface 114. When the input light signal 20 is incident on the planes of varying refractive index from the same side as the acoustic signal 10, the frequency of the input light signal 20 is downshifted by the selected frequency of the acoustic signal 10 in the first light signal 22.

If the input light signal 20 is instead incident on the planes of varying refractive index from a different side to the acoustic signal 10, the frequency of the input light signal 20 is upshifted by the selected frequency of the acoustic signal 10 in the first light signal 22.

The second light signal 24 passing non-diffracted through the acousto-optic interaction region 112 will maintain the frequency of the input light signal 20. Hence, a frequency difference between the first light signal 22 and the second light signal 24 is provided.

The integrated device 100 is further configured to combine the first light signal 22 and the second light signal 24 for generating a combined signal. When the first light signal 22 and the second light signal 24 are combined, the frequency difference between the first light signal 22 and the second light signal 24 will generate a beat frequency of the combined signal. Thus, the combined signal will provide a variation at the beat frequency corresponding to the selected frequency of the acoustic signal 10.

The combined signal may thus be detected, and the beat frequency information may be extracted from the detection of the combined signal. This allows the integrated device 100 to process the acoustic signal 10 using the input light signal 20 for selectively extracting information at a particular, selected frequency. The information at the selected frequency may be transferred to the first light signal 22 and may be further easily extracted by combining the first light signal 22 with the second light signal 24 to form the combined signal, which then provides the beat frequency holding the information of the acoustic signal 10 at the corresponding selected frequency.

The integrated device 100 may be designed for defining the selected frequency of the acoustic signal 10 with which the acousto-optic interaction will occur. The integrated device 100 may be configured to define an angle of the input light signal 20 in relation to the direction of propagation of the acoustic signal 10 in the acousto-optic region 112. This angle may be defined by locations at which the acoustic signal 10 and the input light signal 20 are received into the acousto-optic medium layer 110. Also, the angle may be defined by an angular direction of the input light signal 20 when being out-coupled by the output coupler 124 of the input waveguide 120. Further, the integrated device 100 may be configured to define the selected frequency of the acoustic signal 10 based on the wavelength of the input light signal 20.

The integrated device 100 may be configured to filter the selected frequency from the acoustic signal 10 as the input light signal 20 selectively interacts with the selected frequency.

The integrated device 100 may further be configured to tune defining of the selected frequency such that different selected frequencies may be filtered from the acoustic signal 10. The integrated device 100 may for instance control an angular direction of the input light signal 20 when being out-coupled by the output coupler 124. This may be controlled, e.g., by using a heater for locally heating the input waveguide 120 at the output coupler 124. The selected frequency may also or alternatively be tuned by tuning the wavelength of the input light signal 20. This may be performed by the integrated device 100, e.g., by the light source generating the input light signal being part of the integrated device 100 and being tuned by the integrated device 100, or by controlling the wavelength propagating through the input waveguide 120. Alternatively, the tuning of the wavelength of the input light signal 20 may be provided by controlling an external light source.

It should also be realized that the integrated device 100 may be configured to provide a fixed setting for defining the selected frequency.

In the embodiment shown in Fig. 1, the acousto-optic medium layer 110 is arranged between the waveguide 130 and the transducer 170 such that the light signal is received into the acousto-optic medium layer 110 through a first surface of the acousto-optic medium layer 110 and the acoustic wave is received into the acousto-optic medium layer 110 through a second surface of the acousto-optic medium layer 110 opposite to the first surface.

The combining of the first light signal 22 and the second light signal 24 may be achieved using collecting waveguides. However, according to an alternative, propagation of the first light signal 22 and the second light signal 24 may be controlled in the acousto-optic medium layer 110, e.g., via multiple mirrors, such that the first light signal 22 and the second light signal 24 are combined in the acousto-optic medium layer 110.

As shown in Fig. 1, the integrated device 100 may further comprise a first collecting waveguide 130 configured to receive the first light signal 22. The first collecting waveguide 130 may be arranged at the first interface surface 114 of the acousto-optic medium layer 110 for receiving the first light signal 22.

The first collecting waveguide 130 may extend in the same waveguide layer 122 as the input waveguide 120. The first collecting waveguide 130 may be configured to define a path for propagating the first light signal 22 in the waveguide layer 122.

However, it should be realized that the first collecting waveguide 130 may be arranged at a different location. For instance, the first collecting waveguide 130 may alternatively be arranged below the acousto-optic medium layer 110 at an opposite side in relation to the input waveguide 120.

The first collecting waveguide 130 may comprise an input coupler 132 and may be located at the first interface surface 114 such that the first light signal 22 being diffracted at the acousto-optic interaction region 112 will be incident on the input coupler 132. The first light signal 22 may thus be re-directed by the input coupler 132 for propagating in the first collecting waveguide 130 through total internal reflection.

The integrated device 100 may further comprise a second collecting waveguide 140 configured to receive the second light signal 24. The second collecting waveguide 140 may be arranged at the first interface surface 114 of the acousto-optic medium layer 110 for receiving the second light signal 24.

The second collecting waveguide 140 may thus extend in the same waveguide layer 122 as the input waveguide 120 and the first collecting waveguide 130. The second collecting waveguide 140 may be configured to define a path for propagating the second light signal 24 in the waveguide layer 122.

However, it should be realized that the second collecting waveguide 140 may be arranged at a different location. For instance, the second collecting waveguide 140 may alternatively be arranged below the acousto-optic medium layer 110 at an opposite side in relation to the input waveguide 120.

The second light signal 24 passing non-diffracted through the acousto-optic interaction region 112 will be incident on a second interface surface 116 of the acousto-optic medium layer 110 opposite to the first interface surface 114 at which the input light signal 20 enters the acousto-optic medium layer 110. Thus, the integrated device 100 may comprise a reflector 150 at the second interface surface 116 for reflecting the second light signal 24 back towards the first interface surface 114.

The second collecting waveguide 140 may comprise an input coupler 142 and may be located at the first interface surface 114 such that the second light signal 24 passing the acousto-optic interaction region 112 and being reflected by the reflector 150 will be incident on the input coupler 142. The second light signal 24 may thus be re-directed by the input coupler 142 for propagating in the second collecting waveguide 140 through total internal reflection.

The first collecting waveguide 130 and the second collecting waveguide 140 may thus be arranged at a common interface surface 114 of the acousto-optic medium layer 110. Since the first light signal 22 and the second light signal 24 takes different paths through the acousto-optic medium layer 110, the first collecting waveguide 130 may be spatially displaced from the second collecting waveguide 140 and the first and the second collecting waveguide 130, 140 may be arranged to receive the first light signal 22 and the second light signal 24, respectively.

Referring now to Fig. 2, the first collecting waveguide 130 and the second collecting waveguide 140 may be configured to guide the first light signal 22 and the second light signal 24, respectively, to a photo-sensitive element 160. The first light signal 22 and the second light signal 24 may thus both be incident on the photo-sensitive element 160 such that the photo-sensitive element 160 receives the combined signal of the first light signal 22 and the second light signal 24. The first light signal 22 and the second light signal 24 may be combined to form the combined signal before the combined signal reaches the photo-sensitive element 160.

The photo-sensitive element 160 may thus detect the combined signal. The photo-sensitive element 160 may convert the incident light of the combined signal into an electrical signal representing the incident light. The output electrical signal from the photo-sensitive element 160 may thus provide a beat frequency representing the selected frequency of the acoustic signal 10.

Referring again to Fig. 1, the integrated device 100 may comprise a transducer 170 for generating the acoustic signal 10. The transducer 170 may be formed in a layer above the waveguide layer 122. However, it should be realized that the transducer 170 may be arranged in another location, e.g., below the acousto-optic medium layer 110 or between the acousto-optic medium layer 110 and the waveguide layer 122.

The transducer 170 may be configured to receive an electrical signal to be processed. Thus, the electrical signal received by the transducer 170 may be a signal of interest. The transducer 170 may further be configured to convert the received electrical signal into the acoustic signal 10, which is output into the acousto-optic medium layer 110.

The transducer 170 may be formed in a transducer layer such that a smooth surface of the transducer layer is provided. The transducer 170 may thus be surrounded by a suitable material, which may be transparent to acoustic waves so as not to attenuate acoustic waves generated and output by the transducer 170.

The transducer 170 may comprise an acoustic wave resonator which may generate an acoustic wave based on an electric driving signal. For instance, the transducer 170 may comprise a piezoelectric film 174 arranged between a first electrode 172 and a second electrode 176. The transducer 170 may thus receive a driving signal to the first electrode 172 and the second electrode 176, causing the acoustic signal 10 to be output by the acoustic wave resonator. The acoustic wave resonator may be configured to generate the acoustic signal with a frequency of the electric driving signal.

The piezoelectric film 174 may be a high quality crystalline thin film such that acoustic waves of a high frequency may be formed with high quality. For instance, the piezoelectric film 174 may have a thickness of 100 - 1000 nm.

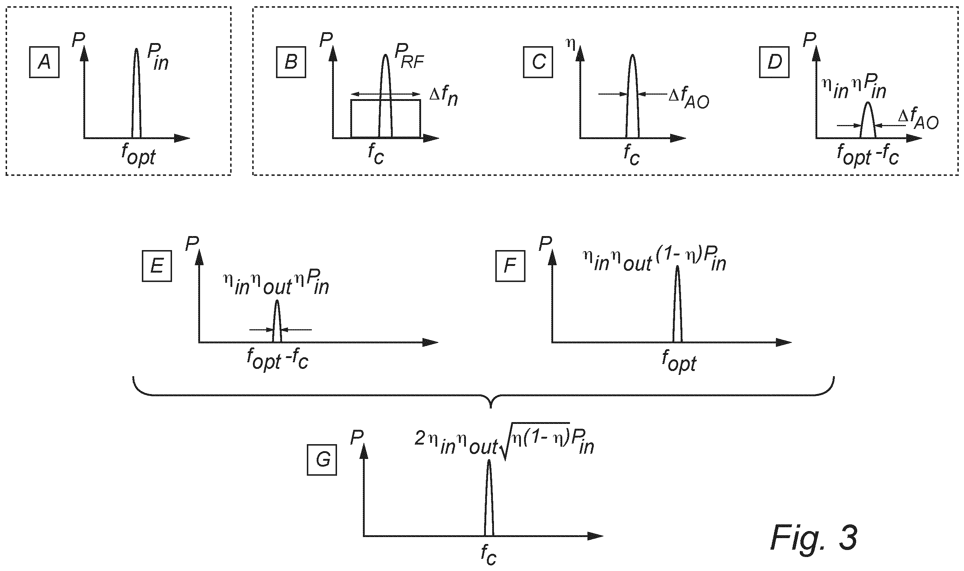

Referring now to Fig. 3, the processing of the signal of interest by the integrated device 100 will be described in more detail. Fig. 3 illustrates different signals in the integrated device 100.

Graph A of Fig. 3 illustrates the input light signal 20. The input light signal 20 is provided with a frequency *fₒₚₜ* and power *Pᵢₙ*. The input light signal 20 may have a spectral linewidth that is much smaller than any other linewidth in the integrated device 100 such that the signal processing is limited by the spectral width of efficiency of acousto-optic interaction. The input light signal 20 is output from the output coupler 124 with efficiency *ηᵢₙ*. The light propagates in the acousto-optic medium layer 120 at an angle *θ_{B}* with respect to the plane of the acousto-optic medium layer 120.

A radio frequency (RF) signal may form a signal of interest. The RF signal may be received through a receiver antenna and drives the piezoelectric transducer 170. Graph B of Fig. 3, illustrates the RF signal.

The RF signal has a center frequency *f_{c}*, which may be a frequency of interest. The RF signal is illustrated to also contains spurious noise sources spread over a spectral bandwidth Δ*fₙ* around *f_{c}*. An equivalent electrical circuit 180 for the detection of the RF signal is represented in Fig. 1.

An incoming power ${P}_{RF}^{in}$ of the RF signal may be represented as: ${P}_{RF}^{in} = \frac{{\left|{V}_{in}\right|}^{2}}{2 {R}_{in}} ,$ where *Vᵢₙ* is an input voltage and *Rᵢₙ* is an input impedance, where it is assumed that the input impedance *Zᵢₙ* = *Rᵢₙ* is purely resistive (for simplicity of the description). It should be realized that the input impedance *Zᵢₙ* may alternatively be a complex value).

The piezoelectric transducer 170 may have a resonance frequency *fᵣₑₛ* which may be represented as: ${f}_{res} = \frac{{ω}_{res}}{2 π} ,$ where *ωᵣₑₛ* is an angular resonance frequency of the piezoelectric transducer 170.

When driven at its resonance frequency *fᵣₑₛ*, the piezoelectric transducer 170 can be represented by an RC-circuit. Thus, an acoustic impedance *Zₜ* of the transducer 170 may be represented as: ${Z}_{t} = {R}_{t} + \frac{1}{{jω}_{res} {C}_{t}} ,$ where *Rₜ* represents a resistive part of the impedance, *Cₜ* is a capacitance of the transducer 170, and *j* is the imaginary unit. The resistive part *Rₜ* describes how much power is transduced from the RF signal to an acoustic wave.

In a simplified one-dimensional model assuming metal electrodes 172, 176 much thinner than the piezo-electric film 174, it can be shown that the following relation is satisfied: ${ω}_{red} {R}_{t} {C}_{t} = \frac{4}{π} {k}_{t}^{2} \left(\frac{{Z}_{t}}{{Z}_{AO}}\right) ,$ where *Zₜ* and *Z_{AO}* are the acoustic impedance of the piezo-electric material and the acousto-optic medium, respectively, and ${k}_{t}^{2}$ is a measure for electromechanical transduction efficiency.

It is assumed that no transmission line effects occur between the receiver antenna and the transducer 170 (i.e., sufficiently short line) and *Rᵢₙ = Rₜ.* In such case, when the transducer 170 is operated at a frequency *ωᵣₑₛ* that satisfies 2*ωᵣₑₛRₜCₜ* < 1, an average acoustic power *P_{ac}* generated in the acousto-optic medium layer 110 is roughly equal to: ${P}_{ac} = \frac{{\left|{V}_{in}\right|}^{2}}{2 {R}_{t}} {\left({ω}_{res}{R}_{t}{C}_{t}\right)}^{2} .$

The generated acoustic signal 10 has the same frequency as the RF driving signal, which here is *fᵣₑₛ = f_{c}*.

When the input light signal 20 interacts with the acoustic signal 10, part of the input light signal 20 is diffracted with efficiency *η* into forming the first light signal 22. The efficiency and bandwidth of the acousto-optic interaction is illustrated by graph C of Fig. 3.

Moreover, the frequency of the first light signal 22 is shifted by an amount equal to the acoustic frequency *f_{c}*. In the configuration shown in Fig. 1, the frequency of the input light signal 20 is shifted down, since the diffracted first light signal 22 moves away from the acoustic signal 10. That is the frequency of the first light signal 22 is shifted from the frequency *fₒₚₜ* of the input light signal 20 to a lower frequency *fₒₚₜ - f_{c}*. This is illustrated by the graph D of Fig. 3 illustrating a resulting signal from the acousto-optic interaction in form of the first light signal 22.

The diffraction is efficient when the following Bragg condition is satisfied: $sin {θ}_{B} = \frac{{λf}_{c}}{2 {n}_{AO} {ν}_{AO}} ,$ where *λ* is a wavelength of the input light signal 20 being *λ = c*/*fₒₚₜ*, where *c* is speed of light, *n_{AO}* and *v_{AO}* are refractive index and speed of sound of the acousto-optic medium.

Hence, the wavelength *λ* of the input light signal 20, the selected frequency *f_{c}* of the acoustic signal, properties of the acousto-optic medium and an angle *θ_{B}* should be set for meeting the Bragg condition. For instance, the output coupler 124 of the input waveguide 120 may be designed such that it emits the input light signal at angle *θ_{B}* determined by the Bragg condition. The diffraction efficiency *η* for small *θ_{B}* is then: $η = \frac{{sin}^{2} \left(\left|κ\right|L\sqrt{1 + \frac{Δ {k}^{2}}{4 {\left|κ\right|}^{2}}}\right)}{1 + \frac{Δ {k}^{3}}{4 {\left|κ\right|}^{2}}} ,$ where L is a length over which the input light signal 20 interacts with the acoustic signal 20, which for small *θ_{B}* is roughly the length of the piezoelectric transducer 170. Moreover, the term |*κ*| may be defined as: $\left|κ\right| \approx \frac{π}{λ} \sqrt{\frac{{M}_{AO} {P}_{ac}}{2 LH}} ,$ where *M_{AO}* is an acousto-optic figure of merit of the acousto-optic medium, and *H* is the width of the piezo-electric transducer 170. Finally, the term Δ*k* may be defined as: $Δ k \approx \left(\frac{{πλf}_{c}}{{n}_{AO} {ν}_{AO}^{2}}\right) Δ f ,$ which describes a phase-mismatch when the driving frequency of the transducer 170 deviates from the center frequency *f_{c}* (that should satisfy the above Bragg condition). The term Δ*f* is a deviation of the driving frequency from the center frequency *f_{c}*.

Hence, for noise frequencies (in the band Δ*fₙ* around *f_{c}*) of the signal of interest, the acousto-optic diffraction efficiency will reduce. The 3dB bandwidth Δ*f*_{3*dB*} of the diffraction efficiency *η* equals: ${Δ}_{{f}_{3 dB}} = \frac{0.8 {n}_{AO} {υ}_{AO}^{2}}{{λf}_{c} L} .$

The overall interaction length *L* will be limited by the decay of the acoustic wave in the acousto-optic medium. The acoustic decay is determined by the following 3dB-length of transmission *T*_{3*dB*}: ${T}_{3 dB} = \frac{ln 2}{2 π} \left(\frac{{υ}_{AO} {f}_{c}^{2}}{{f}_{0} {Q}_{0}}\right) ,$ where *f*₀*Qₒ* is the "frequency-quality product" of the acousto-optic medium. Using standard trigonometry and assuming a vertical extent of the interaction range (i.e., in the direction of the acoustic signal 10) equals *Ψ_{L}T*_{3*dB*} (with *ψ_{L}* a constant), the interaction length *L* is then: $L = \frac{{ψ}_{L} {n}_{AO} {υ}_{OA}^{2} ln 2}{{λf}_{c}^{2}} \left(\frac{{f}_{0} {Q}_{0}}{{f}_{c}}\right) ,$ yielding a bandwidth of providing filtering of the selected frequency of $Δ {f}_{3 dB} = \frac{1.15}{{ψ}_{L}} \left(\frac{{f}_{c}^{2}}{{f}_{0} {Q}_{0}}\right) .$

For instance, for a selected frequency *f_{c}* = 6 GHz, and a modest *Ψ_{L}* = 1, the filter bandwidth equals 2 MHz for an acousto-optic medium layer 110 formed by quartz, 0.4 MHz for an acousto-optic medium layer 110 formed by lithium niobate, and 0.2 MHz for an acousto-optic medium layer 110 formed by sapphire. Hence sub-MHz filter bandwidths can be achieved for GHz frequency signals. Also, it may be noted that this bandwidth is independent of the wavelength of the input light signal 20 and is solely determined by the RF frequency and the frequency-quality product of the acousto-optic medium.

The integrated device 100 may be used with an acoustic signal 10 having a frequency of at least 700 MHz, such as at least 2 GHz, such as at least 10 GHz. Thus, the acousto-optic medium layer 110 may be configured to receive the acoustic signal 10 in the above indicated frequency ranges. For instance, the acoustic signal 10 may be generated from a RF frequency in a frequency range used in 5G or 6G wireless telecommunication.

The first light signal 22 with power *ηᵢₙηPᵢₙ* now propagates towards the first collection waveguide 130. A size of the input coupler 132 of the first collection waveguide 130 may be adapted to match a size of the diffracted beam of the first light signal 22. The diffracted light is collected with an efficiency *ηₒᵤₜ.* Moreover, it should be stressed that the frequency of the first light signal 22 entering the first collection waveguide is frequency shifted, having a frequency of *fₒₚₜ - f_{c}*. The first light signal 22 collected by the first collection waveguide 130 is illustrated in graph E of Fig. 3.

The part of the input light signal 20 which is not diffracted forms a second light signal 24 with power *ηᵢₙ*(1 *- η*)*Pᵢₙ* which propagates through the acousto-optic interaction region 112 towards the interface surface opposite to the interface surface at which the input light signal 20 enters the acousto-optic medium layer 110. For instance, the second light signal 24 may propagate towards the second interface surface 116.

The second light signal 24 may be reflected by the reflector 150 towards the first interface surface 114 for being collected by the second collecting waveguide 140 arranged at the first interface surface 114. The reflector 150 may be assumed to provide unity efficiency, i.e., the entire second light signal 24 is reflected by the reflector 150. For instance, the reflector 150 may be provided by an appropriate reflection coating at the second interface surface 116 of the acousto-optic medium layer 110.

A size of the input coupler 142 of the second collection waveguide 140 may be adapted to match a size of the beam of the second light signal 24. The second light signal 24 may be collected with the same efficiency, *ηₒᵤₜ*, as the collection of the first light signal 22. It should also be noted that the second light signal 24 is not frequency shifted but rather has a frequency *fₒₚₜ.* The second light signal 24 collected by the second collection waveguide 140 is illustrated in graph F of Fig. 3.

The first light signal 22 and the second light signal 24 may be combined again using a combiner formed in the PIC chip. It is assumed that the combiner has negligible insertion loss. The combined signal reaching the photo-sensitive element 160, such as a photodetector (PD), will induce a beat signal at the RF frequency *f_{c}* detected by the PD 160. The power *P_{PD}* of the combined signal at the PD 160 may be equal to: ${P}_{PD} = 2 {η}_{in} {η}_{out} \sqrt{η \left(1-η\right)} {P}_{in} cos \left({ω}_{c}t+φ\right) ,$ where *ω_{c}t* represents variation of the signal at the RF frequency with *ω_{c}* = 2*πf_{c}* and *φ* is a phase-difference accommodating all phase delays. Assuming perfect phase-matching at *f_{c}*, substituting for *η* yields a power amplitude: $\left|{P}_{PD}\right| = 2 {η}_{in} {η}_{out} {P}_{in} sin \left(\left|κ\right|L\right) cos \left(\left|κ\right|L\right) = {η}_{in} {η}_{out} {P}_{in} sin \left(2\left|κ\right|L\right) .$

The combined signal received at the PD 160 is represented in graph G in Fig. 3.

A current *I_{PD}* induced on the PD 160 is proportional to the incident power and responsivity of the PD 160. An output voltage *Vₒᵤₜ* of the PD 160 may thus be expressed as *Vₒᵤₜ = RₒᵤₜI_{PD}*, where *Rₒᵤₜ* is a resistance associated with the PD 160.

An overall RF link gain *g_{RF}* of the integrated device 100 may be described as: ${g}_{RF} = {\left(\frac{\left|{V}_{out}\right|}{\left|{V}_{in}\right|}\right)}^{2} ,$ and is then ultimately given by: ${g}_{RF} = \frac{1}{sin {θ}_{B}} \sqrt{\frac{{f}_{0} {Q}_{0}}{{f}_{c}}} {\left(\frac{π}{2 λ}\right)}^{2} {M}_{AO} \left({P}_{in}^{2}\right) {\left(\frac{4}{π}{k}_{t}^{2}\frac{{Z}_{t}}{{Z}_{AO}}\right)}^{2} {\left(\frac{{rη}_{in} {η}_{out}}{{R}_{out}}\right)}^{2} \sqrt{π ln 2 \frac{{ψ}_{L}}{{η}_{L}}} ,$ where *r* is the voltage responsivity of the PD 160 (*r = Vₒᵤₜ*/*P_{PD}*) and *η_{L}* is determined by the diameter *H* of the acoustic signal 10, and the interaction length *L* through: ${η}_{L} L = \frac{{n}_{AO} {πH}^{2}}{4 λ} .$

It should be realized that, if needed, the RF link gain may be increased by increasing an amplitude of the input light signal 20.

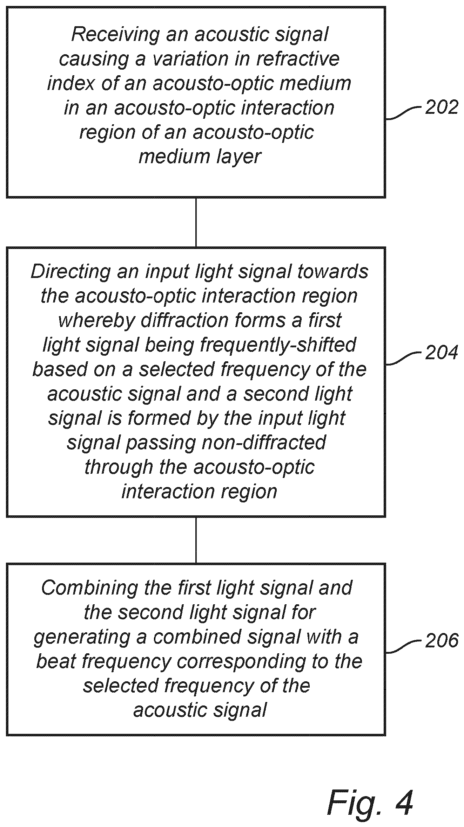

Referring now to Fig. 4, a method for signal processing will be briefly described.

The method comprises receiving 202, by an acousto-optic medium layer, an acoustic signal being representative of a signal to be processed. The acoustic signal causes a variation in refractive index of an acousto-optic medium of the acousto-optic medium layer in an acousto-optic interaction region based on the acoustic signal propagating in the acousto-optic medium layer.

The method further comprises directing 204 an input light signal into the acousto-optic medium layer towards the acousto-optic interaction region. The acousto-optic medium in the acousto-optic interaction region causes diffraction of a first portion of the input light signal, in dependence of a relation of the input light signal to a selected frequency of the acoustic signal, by the input light signal interacting with the variation in refractive index. The diffraction forms a first light signal being frequency-shifted based on the selected frequency of the acoustic signal. Further, a second portion of the input light signal passes non-diffracted through the acousto-optic interaction region for forming a second light signal.

The method further comprises combining 206 the first light signal and the second light signal for generating a combined signal with a beat frequency corresponding to the selected frequency of the acoustic signal. The combined signal may for instance be detected by a photodetector, wherein the beat frequency may be detected forming a representation of the selected frequency of the acoustic signal.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An integrated device (100) for signal processing, said integrated device (100) comprising:
an acousto-optic medium layer (110), wherein the acousto-optic medium layer (110) is configured to receive an acoustic signal (10) being representative of a signal to be processed, wherein acousto-optic medium of the acousto-optic medium layer (110) is configured to provide a variation in refractive index in an acousto-optic interaction region (112) based on the acoustic signal (10) propagating in the acousto-optic medium layer (110);
an input waveguide (120) configured to guide an input light signal (20) and configured to direct the input light signal (20) into the acousto-optic medium layer (110) towards the acousto-optic interaction region (112);
wherein the acousto-optic medium in the acousto-optic interaction region (112) is configured to cause a first portion of the input light signal (20) to be diffracted, in dependence of a relation of the input light signal to a selected frequency of the acoustic signal (10), by the input light signal (20) interacting with the variation in refractive index for forming a first light signal (22) being frequency shifted based on the selected frequency of the acoustic signal (10), and wherein the acousto-optic interaction region (112) is configured to provide a second portion of the input light signal (20) passing non-diffracted through the acousto-optic interaction region for forming a second light signal (24);
wherein the integrated device (100) is configured to combine the first light signal (22) and the second light signal (24) for generating a combined signal with a beat frequency corresponding to the selected frequency of the acoustic signal (10).

2. The integrated device according to claim 1, wherein the integrated device (100) is configured to set an angle of the input light signal (20) in relation to a direction of propagation of the acoustic signal (10) in the acousto-optic interaction region (112) and a wavelength of the input light signal (20) for defining the selected frequency of the acoustic signal (10), wherein the integrated device (100) is configured to process the selected frequency from the acoustic signal (10).

3. The integrated device according to claim 2, wherein the input waveguide (120) comprises an output coupler (124) configured to direct the input light signal (20) into the acousto-optic medium layer (110), the output coupler (124) being configured to control the angle of the input light signal (20) in relation to the direction of propagation of the acoustic signal (10) in the acousto-optic interaction region (112).

4. The integrated device according to claim 2 or 3, wherein the input waveguide (120) is configured to receive the input light signal from a light source, wherein the input light signal (20) is a coherent signal of a single wavelength.

5. The integrated device according to any one of the preceding claims, further comprising a first collecting waveguide (130) configured to receive the first light signal (22) for propagating the first light signal (22) in the first collecting waveguide (130) and a second collecting waveguide (140) configured to receive the second light signal (24) for propagating the second light signal (24) in the second collecting waveguide (140).

6. The integrated device according to claim 5, wherein each of the first collecting waveguide (130) and the second collecting waveguide (140) is arranged at an interface surface of the acousto-optic medium layer (110) and located to receive the first light signal (22) and the second light signal (24), respectively, propagating in the acousto-optic medium layer (110).

7. The integrated device according to claim 6, wherein the first collecting waveguide (130) and the second collecting waveguide (140) are arranged at a common interface surface (114) of the acousto-optic medium layer (110), wherein the integrated device (110) comprises at least one reflector (150) at an opposite interface surface (116) of the acousto-optic medium layer (110) being opposite to the common interface surface (114), wherein the reflector (150) is configured to reflect the second light signal (24).

8. The integrated device according to any one of claims 5-7, further comprising a photo-sensitive element (160), which is connected to the first collecting waveguide (130) and the second collecting waveguide (140) for receiving the combined signal of the first light signal (22) and the second light signal (24) in the photo-sensitive element (160).

9. The integrated device according to any one of the preceding claims, wherein the acousto-optic medium layer (110) is configured to receive the acoustic signal (10) at a first interface surface (114) of the acousto-optic medium layer (110) facing the input waveguide (120).

10. The integrated device according to claim 9, wherein the integrated device (100) further comprises an acoustic absorber (180) arranged at a second interface surface (116) of the acousto-optic medium layer (110) opposite to the first interface surface (114).

11. The integrated device according to any one of the preceding claims, further comprising a transducer (170) configured to receive an electrical signal to be processed and configured to convert the electrical signal into the acoustic signal (10), wherein the transducer (170) is further configured to output the acoustic signal (10) into the acousto-optic medium layer (110).

12. The integrated device according to any one of the preceding claims, wherein the acousto-optic medium of the acousto-optic medium layer (110) is configured to provide the variation in refractive index in the acousto-optic interaction region (112) based on a traveling wave of the acoustic signal (10) propagating in the acousto-optic medium layer (110).

13. The integrated device according to any one of the preceding claims, wherein the acousto-optic medium of the acousto-optic medium layer (110) is sapphire, lithium niobate, or quartz.

14. The integrated device according to any one of the preceding claims, wherein the acousto-optic medium layer (110) is configured to receive the acoustic signal (10) having a frequency of at least 700 MHz, such as at least 2 GHz, such as at least 10 GHz.

15. A method for signal processing, said method comprising:
receiving (202), by an acousto-optic medium layer, an acoustic signal being representative of a signal to be processed, the acoustic signal causing a variation in refractive index of an acousto-optic medium of the acousto-optic medium layer in an acousto-optic interaction region based on the acoustic signal propagating in the acousto-optic medium layer;
directing (204) an input light signal into the acousto-optic medium layer towards the acousto-optic interaction region, wherein the acousto-optic medium in the acousto-optic interaction region causes diffraction of a first portion of the input light signal, in dependence of a relation of the input light signal to a selected frequency of the acoustic signal, by the input light signal interacting with the variation in refractive index for forming a first light signal being frequency shifted based on the selected frequency of the acoustic signal, and wherein a second portion of the input light signal passes non-diffracted through the acousto-optic interaction region for forming a second light signal; and
combining (206) the first light signal and the second light signal for generating a combined signal with a beat frequency corresponding to the selected frequency of the acoustic signal.
